# EUROPEAN PATENT APPLICATION

(11) **EP 1 241 556 A1**
(43) Date of publication of application: **18.09.2002**
(21) Application number: 02005767.5
(22) Date of filing: 13.03.2002
(51) Int. Cl.: G06F 3/023

(54) **Character input apparatus and remote character input system**

(30) Priority: 15.03.2001 JP 2001074175
(71) Applicant: Kabushiki Kaisha Toshiba, Minato-ku, Tokyo 105 (JP)
(72) Inventor: Wade, Kouetsu, K.K. Toshiba, Minato-ku, Tokyo 105-8001 (JP)
(74) Representative: Henkel, Feiler, Hänzel

(57) **Abstract**

A remote controller(2) is provided with a plurality of character buttons. A character code table (25) stores character codes of characters in a two-dimensional matrix by assigning the button numbers to a vertical axis and the number of depressions of buttons to a horizontal axis. In accordance with the number of depressions of each character button , which is determined by an input section(22), a control section (21) acquires a corresponding character code from the character code table (25) and causes a display section (23) to display the associated character. In addition, the control section(21) , when informed by the input section (22) of the depression of a transmission button, delivers a character code of the displayed character to an infrared signal transmission section (24) and instructs the infrared signal transmission section (24) to send to a TV apparatus (1) an infrared signal representative of the character code.

## Description

The present invention relates to a character input apparatus and a remote character input system, which are suitably applicable to, e.g. an electronic device with a data communication function. More particularly, this invention relates to a character input apparatus and a remote character input system, which are capable of performing character input from a remote location by using a small-sized apparatus such as a standalone remote controller, without the need to use a large-sized apparatus such as a keyboard.

With recent remarkable technological innovations in the field of data communications, various household electric devices connectable to, e.g. the Internet, have been developed. There is known a TV apparatus for enjoying programs received via TV broadcasting, which is provided with not only the function of connection to the Internet but also the function of transmitting data from the viewer side to the TV broadcasting station via a public network.

The TV apparatus having the function of sending data from the viewer side to the TV broadcasting station is called, for example, an interactive television. With the prevalence of these types of TV apparatuses, TV broadcasting stations can provide interactive services to a great number of non-specified viewers.

In addition, most modern household electric apparatuses, including personal computers, sound systems, Video Cassette Recorders (VCRs), DVD players and the like, have remote controls. Using so-called remote controllers, the user can remote-control these apparatuses.

It is expected that with the prevalence of household electric apparatuses having this kind of data communication function, the number of opportunities to input characters will increase. Keyboards are principal devices currently used for character input.

However, the size of a keyboard is large, and the operation of the keyboard requires some skill. It is thus undesirable to use keyboards for general household electric apparatuses other than personal computers. On the other hand, conventional remote controllers are not designed to input characters.

Various apparatuses for remotely inputting characters to main apparatuses have been proposed. Examples of such character input apparatuses are a character input apparatus disclosed in Jpn. Pat. Appln. KOKAI Publication No. 10-228344, and an information terminal disclosed in Jpn. Pat. Appln. KOKAI Publication No. 2000-315959.

In the case of the character input apparatus of Jpn. Pat. Appln. KOKAI Publication No. 10-228344, a main apparatus displays on its screen a virtual keyboard in which blocks of m × n keys are arranged in an m × n matrix. First depression of one of m × n buttons on a remote controller is defined as selection of the associated block, and second depression of the button is defined as selection of the key in the selected block.

Certainly, according to this method, character input can be effected by the small-sized remote controller. However, the virtual keyboard needs to be displayed on the screen of the main apparatus, and complex technical design is required in the main apparatus. Therefore, it is difficult to apply this method to conventional household electric devices.

On the other hand, in the case of the information terminal disclosed in Jpn. Pat. Appln. KOKAI Publication No. 2000-315959, a liquid crystal touch panel is provided on a remote controller, and the touch panel displays input keys. One of the input keys is depressed to input a character, and the character input by the depression is temporarily displayed for confirmation. Thereby, a desired character can easily be input by the user at a remote location.

According to this method, the main apparatus may only require a structure for receiving a character signal sent from the remote controller, and it is relatively easy to apply the method to conventional household electric devices. However, in this method, all input keys need to be displayed on the liquid crystal touch panel. As a result, the size of the remote controller has to be increased.

The present invention has been made in consideration of the above circumstances, and in preferred embodiments provides a character input apparatus and a remote character input system, which are capable of performing character input from a remote location by using a small-sized apparatus such as, for example, a standalone remote controller, without the need to use a large-sized apparatus such as keyboard.

According to an embodiment of the invention, there is provided a character input apparatus for inputting a character from a remote location to a main apparatus such as, but not limited to, a television, a personal computer, a sound system, a DVD player, a VCR, a personal digital assistant (PDA) and the like, the character input apparatus comprising: a display device; a plurality of operation buttons, to each of which a plurality of characters is assigned; an input control device configured to select one of the plurality of characters assigned to each of the plurality of operation buttons in accordance with the number of depressions of the each of the operation buttons, and to cause the display device to display the selected one of the plurality of characters; and a character signal transmission device configured to directly transmit to the main apparatus a signal corresponding to the selected one of the plurality of characters displayed on the display device.

According to this embodiment of the invention, a large number of characters can be input by a small number of operation buttons. In other words, character input can be effected by a small-sized remote controller. This embodiment of the character input apparatus can be implemented simply by adding to the main apparatus a structure for receiving a character signal sent from the remote controller. Thereby, the user can easily input a desired character from the position of the user, i.e. from a remote location.

According to another embodiment of the invention, there is provided a remote character input system for an electronic device, the system comprising a main apparatus and a character input apparatus for inputting a character from a remote location to the main apparatus, wherein the character input apparatus comprises: a plurality of operation buttons; and an operation signal transmission device which directly transmits to the main apparatus an operation signal corresponding to one of the plurality of operation buttons when the one of the plurality of operation buttons is depressed, and the main apparatus comprises: a display device; a character table in which a plurality of characters assigned to the operation signals are defined; an operation signal receiving device for receiving the operation signal transmitted from the character input device; and an input control device which selects one of the plurality of characters assigned to the operation signal received by the operation signal receiving device in accordance with the number of times the operation signal is received, and causes the display device to display the selected one of the plurality of characters.

According to this embodiment of the invention, one of a plurality of characters assigned to each operation button of the remote controller is effected on the main apparatus side. In this case, too, a large number of characters can be input by a small number of operation buttons. Therefore, character input can be effected by a small-sized remote controller simply by providing the character selection function of the remote controller on the main apparatus side.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows the structure of a TV system to which a remote character input system according to a first embodiment of the present invention is applied;
FIG. 2 shows an external appearance of a remote controller according to the first embodiment;
FIG. 3 shows an example of the content of a character code table provided in the remote controller of the first embodiment;
FIG. 4 is a first flow chart illustrating the operational procedures of the remote character input system according to the first embodiment;
FIG. 5 is a second flow chart illustrating the operational procedures of the remote character input system according to the first embodiment; and
FIG. 6 shows the structure of a TV system to which a remote character input system according to a second embodiment of the present invention is applied.

Embodiments of the present invention will now be described with reference to the accompanying drawings.

### (First Embodiment)

A first embodiment of the present invention will now be described. In this first embodiment, the main apparatus is a TV system.

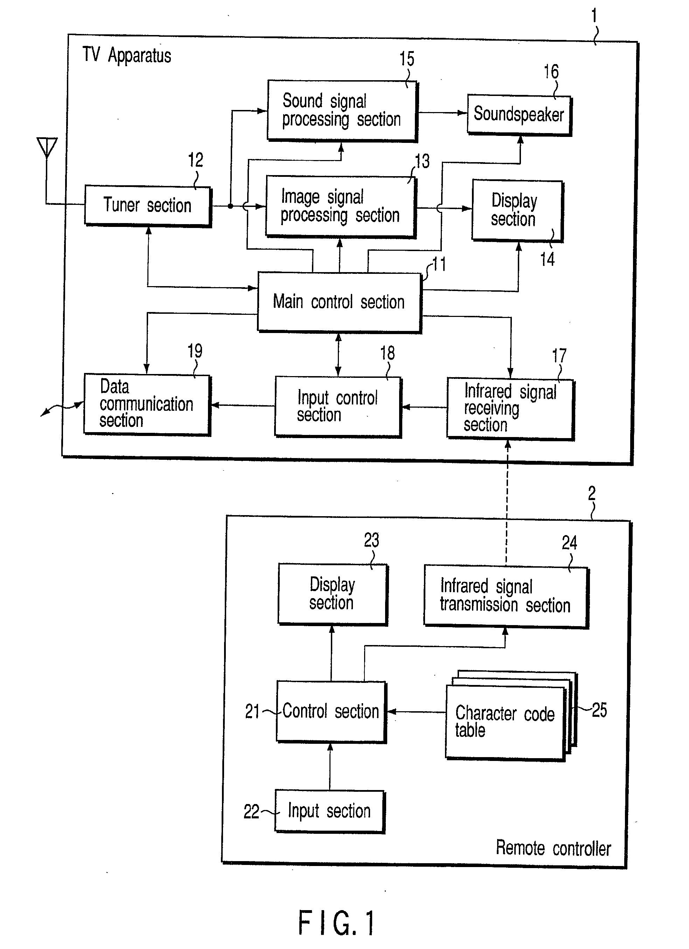

FIG. 1 shows the structure of a TV system to which a remote character input system according to a first embodiment of the invention is applied.

The TV system is an interactive TV system capable of using interactive services provided by broadcasting stations. As is shown in FIG. 1, the TV system comprises a TV apparatus 1, which is a main body of the TV system, and a remote controller 2 for inputting characters from a remote location to the TV apparatus 1. The data transmission between the TV apparatus 1 and remote controller 2 is effected, in this example embodiment, by infrared communication based on, e.g. IrDA (InfraRed Data Association) standards. However, other embodiments may employ other types of wireless communication, such as, but not limited to, Bluetooth™ RF signals or other suitable electromagnetic signals.

The entirety of the TV apparatus 1 is controlled by a main control section 11. The main control section 11 controls the operations of a tuner section 12, an image signal processing section 13, a display section 14, a sound signal processing section 15, a speaker 16, an infrared signal receiving section 17, an input control section 18, and a data communication section 19.

The tuner section 12 receives TV broadcasting radio waves from broadcasting stations via an antenna, and converts the received radio waves to an electric signal. The electric signal produced by the tuner section 12 is delivered to the image signal processing section 13. The image signal processing section 13 subjects the electric signal to image processing. A resultant image is displayed on the display section 14. The electric signal produced by the tuner section 12 is also delivered to the sound signal processing section 15. The sound signal processing section 15 subjects the electric signal to sound processing, and an obtained sound is output from the speaker 16.

The infrared signal receiving section 17 receives an infrared signal from an infrared signal transmission section 24 (to be described later) of the remote controller 2 via a direct wireless transmission path. Communication data carried by the infrared signal is delivered to the input control section 18 via a built-in register in the infrared signal receiving section 17. The input control section 18 reads the communication data from the register of the infrared signal receiving section 17, and transfers the read-out communication data to the data communication section 19. The data communication section 19 transmits the data, which has been transferred from the input control section 18, to a broadcasting station via, e.g. the Internet or a public network.

On the remote controller 2 side, the entirety of the remote controller 2 is controlled by a control section 21. The control section 21 controls the operations of an input section 22, a display section 23 and the aforementioned infrared signal transmission section 24. The remote controller 2 includes a character code table 25 in order to realize a character input control, as will be described later.

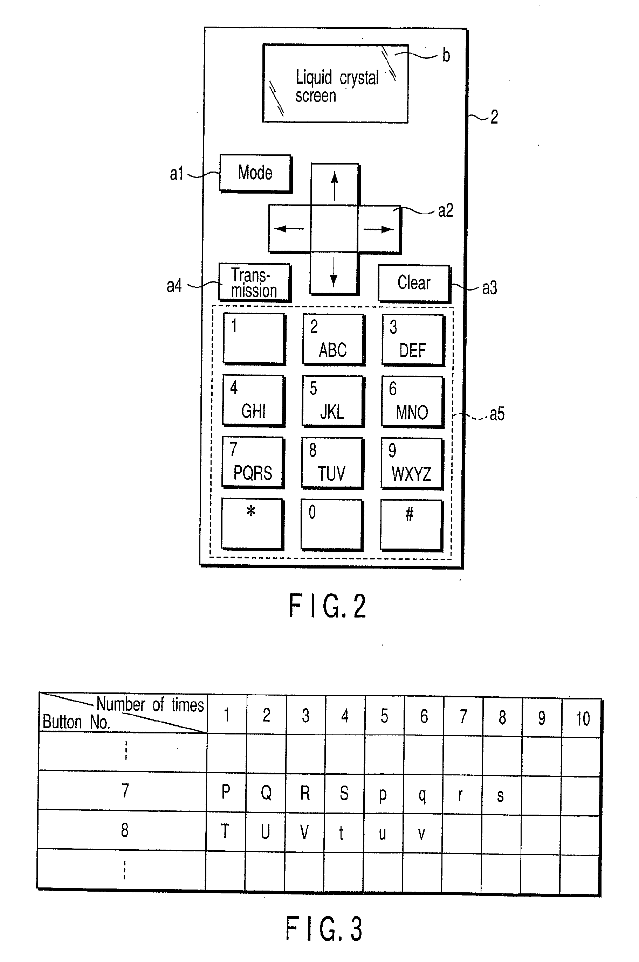

When an operation button on the remote controller 2 is depressed by the user, the input section 22 sends a signal corresponding to the operation button to the control section 21. FIG. 2 shows an example of an external appearance of the remote controller 2. As is shown in FIG. 2, the front face of the case of the remote controller 2 is provided with various operation buttons including a mode button a1, a cruciform button a2, a clear button a3, a transmission button a4 and character buttons a5. The front face also has a liquid crystal screen b for temporarily displaying input characters.

Based on an instruction from the control section 21, the display section 23 causes the liquid crystal screen b (in FIG. 2) to display characters. The infrared signal transmission section 24 transmits character codes, which have been transferred from the control section 21, to the infrared signal receiving section 17 of TV apparatus 1 by means of an infrared signal.

The character code table 25 defines the correspondence between the character buttons a5 and characters according to the character type (alphabet, numerals). FIG. 3 shows an example of the content of the character code table 25, which records character codes of characters in a two-dimensional matrix by assigning the number of depressions of buttons to a horizontal axis and the button numbers to a vertical axis. Each time the mode button a1 is depressed, the control section 21 successively switches the character type to be input, in an order of "alphabet" → "numerals" → "alphabet". Referring to FIG. 3, a description will now be given of the character input control that characterizes the remote character input system of the invention.

Assume that the character type to be input is set at "alphabet". Consider the case of inputting characters "US" to the TV apparatus 1 by means of the remote controller 2. In this case, in order to first input "U", the user depresses the button No. 8 of character buttons a5, which is located at the intersection of the middle column and the third row from above. The control section 21 is informed of the depression of the button No. 8 by the input section 22. The control section 21 acquires a character code of character "T" corresponding to the first depression of the button No. 8 from the character code table 25, and causes the display section 23 to display "T".

The user, who has viewed the display of "T", depresses the same character button a5, i.e. button No. 8, once again. The control section 21, which is informed of the second depression of the button No. 8 by the input section 22, acquires a character code of character "U" corresponding to the second depression of the button No. 8 from the character code table 25, and causes the display section 23 to display "U" in place of "T". The user confirms the display of desired character "U", and then depresses the character button a5 with button No. 7 in order to input the next character "S".

The control section 21 is informed of the depression of the character button a5 with button No. 7, and determines a new input operation of the next character since this character button a5 is different from the previous character button. The control section 21 acquires a character code of character "P" corresponding to the first depression of the button No. 7 from the character code table 25, and causes the display section 23 to display "P" next to the previous input "U". The user then depresses the same character button a5 three times and changes the displayed character from "P" to "Q", to "R" and to "S". Upon confirming the display of desired character "S", the user depresses the transmission button a4 in order to send the displayed characters "US" to the TV apparatus 1. The depression of transmission button a4 is performed voluntarily by the user at any time the user decides the characters on the display are complete.

The control section 21 is informed of the depression of the transmission button a4 by the input section 22. The control section 21 then delivers character codes of the characters ("US") displayed on the display section 23 to the infrared signal transmission section 24, and instructs the infrared signal transmission section 24 to send an infrared signal representative of the character codes. Thereby, the characters "US" are input to the TV apparatus 1.

As another example, when characters "U" and "V", which are assigned to the same character button a5, are to be input in succession, the user depresses the cruciform button a2 immediately after the character "U" is displayed, and shifts the position of input to the next position. At this time, the control section 21 determines a new input operation of the next character and effects the input of "U". The user depresses the same character button a5 at the next position.

When an unwanted character in a character sequence is to be deleted, the user selects the character to be deleted by depressing the cruciform button a2. Thereafter, the user depresses the clear button a3 and executes the deletion.

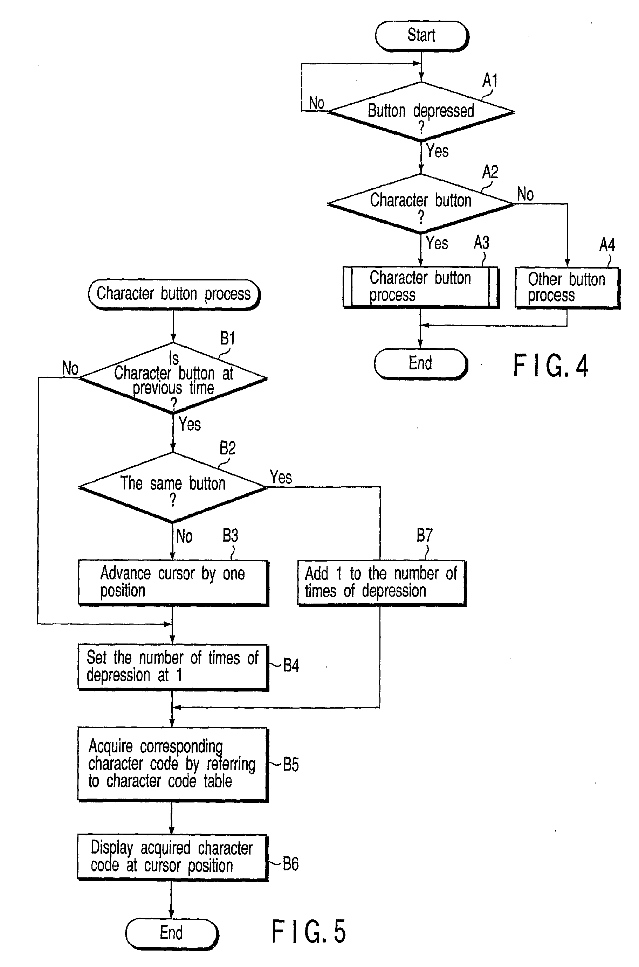

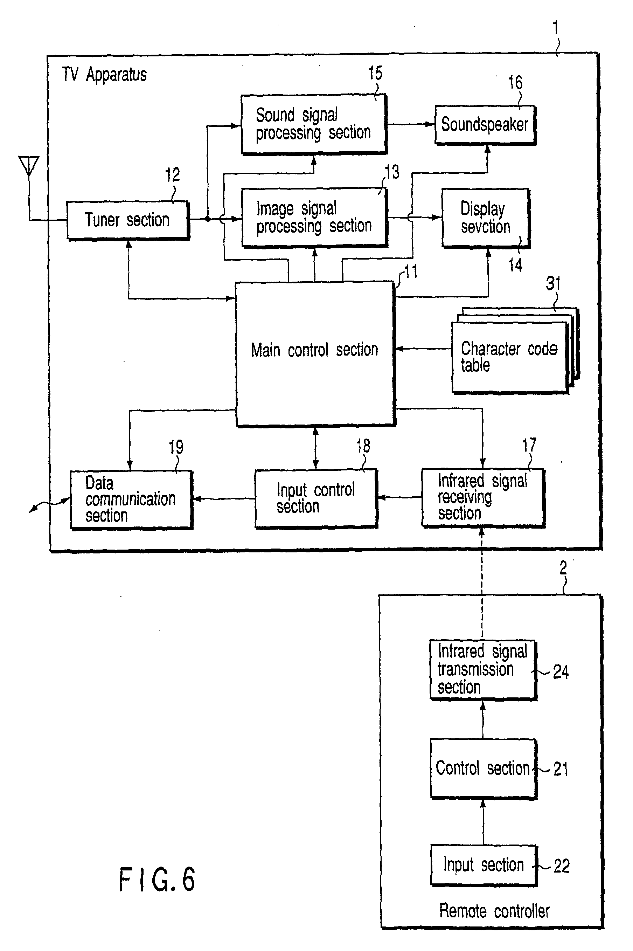

Referring to FIGS. 4 and 5, the operational procedures of this remote character input system will now be described.

If the control section 21 is informed of depression of any button by the input section 22, the control section 21 determines whether the depressed button is a character button a5 or not (step A1 in FIG. 4). If the depressed button is the character button a5 (YES in step A1), the control section 21 executes a character button process in FIG. 5 (step A3 in FIG. 4). If the depressed button is not the character button a5 (NO in step A1), the control section 21 executes a process associated with the depressed button (step A4 in FIG. 4).

If the character button process is initiated, the control section 21 first checks whether the previously depressed button is also the character button a5 (step B1 in FIG. 5). If it is not the character button a5 (NO in step B1), the control section 21 determines an input operation for a new character, and sets the number of depressions at 1 (step B4 in FIG. 5) and acquires a character code of a character corresponding to the first depression of this character button a5 from the character code table 25 (step B5 in FIG. 5). The control section 21 instructs the display section 23 to display the character of the acquired character code at the cursor position (step B6 in FIG. 5).

If the previously depressed button is also the character button a5 (YES in step B1 in FIG. 5), the control section 21 checks whether the currently depressed character button a5 is the same character button as the previously depressed one and whether or not the currently depressed character button a5 was depressed within a preset time period after depression of the previously depressed character button a5. (step B2 in FIG. 5). If the answer to either of these questions is no (NO in step B2), the control section 21 determines a new character input and advances the cursor position to the next position (step B3 in FIG. 5), and executes the process of steps B4 to B6 in FIG. 5.

If the currently depressed character button a5 is the same character button as the previously depressed one and the currently depressed character button a5 is depressed within the preset time period (YES in step B2 in FIG. 5), the control section 21 determines a change of the displayed character and adds 1 to the number of depressions (step B7 in FIG. 5) and executes the above-described process of steps B5 and B6 in FIG. 5.

In this manner, in this remote character input system, a plurality of characters are assigned to each of the character buttons a5 provided on the remote controller 2. On the basis of the number of depressions of each character button a5, one of the plurality of characters is input. Thereby, a large number of characters can be input by a small number of operation buttons, and character input can be effected from a remote location by a small-sized remote controller without the need to use a large-sized apparatus such as a keyboard.

In this embodiment, the display section 23 for temporarily displaying input characters is provided on the remote controller 2. Alternatively, even without the provision of the display section 23, such a character input control can be performed that a plurality of characters are assigned to each character button a5 and one of the characters is input in accordance with the number of depressions.

### (Second Embodiment)

A second embodiment of the present invention will now be described. In the second embodiment, the main apparatus is again a TV system.

FIG. 6 shows the structure of a TV system to which a remote character input system according to the second embodiment of the invention is applied.

The remote character input system according to the second embodiment differs from the remote character input system according to the first embodiment in that a character code table 31 is additionally provided in the TV apparatus 1 and the character code table 25 is removed from the remote controller 2.

Specifically, in the second embodiment, the TV apparatus 1 performs the character input control, which is performed in the remote controller 2 in the remote character input system according to the first embodiment, that is, the character input control in which one of the plurality of characters is selected in accordance with the number of depressions of each character button a5 within a preset time period.

In this embodiment, the remote controller 2 transmits an operation signal corresponding to each character button a5 to the TV apparatus 1 each time the character button a5 is depressed. On the TV apparatus 1 side, in the TV apparatus 1 that has received the operation signal, the main control section 11 acquires from the character code table 31 a character code corresponding to the character button a5 and the number of times the operation signal is received within a preset time period (corresponding to the number of depressions of the character button a5 within the preset time period) and causes the display section 14 to display the character of the character code.

In the second embodiment, the remote controller 2 further includes a mode button similar to mode button a1 (shown in FIG. 2) for selecting a character type, as in the first embodiment. However, in the second embodiment, the infrared signal transmission section 24 directly transmits, for example via wireless communications, a mode signal corresponding to the mode button to the main apparatus when the mode button is depressed.

In the second embodiment, the infrared signal receiving section 17 of the main apparatus 1 receives the mode signal transmitted from the remote controller 2. The character table 31 defines the plurality of characters assigned to the operation signal in accordance with the character type defined by the mode signal. The input control section 18 switches the character type corresponding to the operation signal, when the mode signal is received.

Thereby, like the first embodiment, a large number of characters can be input by a small number of operation buttons, and character input can be effected from a remote location by a small-sized remote controller, for example, a standalone remote controller, without the need to use a large-sized apparatus such as a keyboard.

Additional advantages and modifications will readily occur to those skilled in the art. Therefore, the invention in its broader aspects is not limited to the specific details and representative embodiments shown and described herein. Although embodiments of the invention have been described wherein the main apparatus is a TV system, other embodiments of the present invention may be implemented for use with other types of main apparatuses such as, but not limited to, televisions, personal computers, sound systems, DVD players, VCRs, PDAs and the like. Accordingly, various modifications may be made without departing from the spirit or scope of the general inventive concept as defined by the appended claims and their equivalents.

## Claims

1. A character input apparatus for inputting a character from a remote location to a main apparatus (1), **characterized by** comprising:
a display device (23);
a plurality of operation buttons (22), to each of which a plurality of characters is assigned;
a transmission button (22);
an input control device (21) for selecting at least one of said plurality of characters assigned to at least one of the plurality of operation buttons in accordance with a number of depressions of said one of the plurality of operation buttons (22), and to cause the display device (23) to display the selected one of said plurality of characters; and
a character signal transmission device (24) for directly transmitting to said main apparatus (1), upon depression of said transmission button, a signal corresponding to the selected one of said plurality of characters displayed on the display device (23) when said transmission button (22) is depressed.

2. A character input apparatus according to claim 1, **characterized by** further comprising:
a mode button (22) for switching a character type to be input; and
a character table (25) in which each of the plurality of characters assigned to said each of the plurality of operation buttons (22) is defined in accordance with the character type,
wherein said input control device (21) switches the character type corresponding to said each of the plurality of operation buttons (22), when the mode button is depressed.

3. A character input apparatus according to claim 1, **characterized in that** the main apparatus (1) is a television system.

4. A character input apparatus according to claim 1, **characterized in that** the main apparatus (1) is at least one of a personal computer, a sound system, a DVD player, a VCR, and a personal digital assistant.

5. A character input apparatus according to claim 1, **characterized in that** the display device (23), the plurality of operation buttons (22), the input control device(21) , and the character signal transmission device (24) are located on a standalone remote controller.

6. A character input apparatus according to claim 1, **characterized in that** the character signal transmission device (24) directly transmits a wireless signal.

7. A character input apparatus according to claim 6, **characterized in that** the wireless signal is at least one of a Bluetooth RF signal and an infrared signal.

8. A character input apparatus for inputting a character from a remote location to a main apparatus (1), comprising:
a plurality of operation buttons (22), to each of which a plurality of characters is assigned;
a transmission button (22);
an input control device (21) for selecting one of said plurality of characters assigned to one of the plurality of operation buttons (22) in accordance with a number of depressions of said one of the plurality of operation buttons (22); and
a character signal transmission device (24) for directly transmitting to said main apparatus (1), upon depression of said transmission button (22), a signal corresponding to the one of said plurality of characters selected by said input control device (21).

9. A character input apparatus according to claim 8, **characterized by** further comprising:
a mode button (22) for switching a character type to be input; and
a character table (25) in which each of the plurality of characters assigned to said each of the plurality of operation buttons (22) is defined in accordance with the character type,
wherein said input control device (21) switches the character type corresponding to said each of the plurality of operation buttons (22), when the mode button (22) is depressed.

10. A remote character input system for an electronic device, the system **characterized by** comprising a main apparatus (1) and a character input apparatus (2) for inputting a character from a remote location to the main apparatus (1),
wherein said character input apparatus (2) comprises:
a plurality of operation buttons (22); and
an operation signal transmission device (24) which transmits to said main apparatus (1) an operation signal corresponding to at least one of the plurality of operation buttons (22) when the at least one of the plurality of operation buttons (22) is depressed, and
said main apparatus (1) comprises:
a display device (14);
a character table (31) in which a plurality of characters assigned to the operation signal are defined;
an operation signal receiving device (17) for receiving the operation signal transmitted from the character input device (2); and
an input control device (18) which selects one of said plurality of characters assigned to the operation signal received by the operation signal receiving device (17) in accordance with the number of times the operation signal is received, and causes the display device (14) to display the selected one of said plurality of characters.

11. A remote character input system according to claim 10, **characterized in that** said character input device (2) comprises:
a mode button (22) for switching a character type to be input; and
a mode signal transmission device (24) for transmitting a mode signal corresponding to the mode button (22) to the main apparatus (1) when the mode button (22) is depressed,
said main apparatus (1) comprises a mode signal receiving device (17) for receiving the mode signal transmitted from the character input device (2),
said character table (31) defines the plurality of characters assigned to the operation signal in accordance with the character type, and
said input control device (18) switches the character type corresponding to the operation signal based on the character table (31), when the mode signal is received by the mode signal receiving device (17).

12. A remote character input system according to claim 10, **characterized in that** the input control device (18) selects one of said plurality of characters assigned to the operation signal received by the operation signal receiving device (17) in accordance with the number of times the operation signal is received within a preset time period.

13. A method of inputting a character from a character input device to a main apparatus located at a remote location, **characterized by** comprising the steps of:
providing a display device;
providing a plurality of operation buttons, to each of which a plurality of characters is assigned;
providing a transmission button;
selecting one of said plurality of characters assigned to one of the plurality of operation buttons in accordance with a number of depressions of said one of the plurality of operation buttons, and causing the display device to display the selected one of said plurality of characters; and
directly transmitting to said main apparatus, upon depression of said transmission button, a signal corresponding to the selected one of said plurality of characters displayed on the display device.

14. The method according to claim 13,
**characterized by** further comprising the steps of:
providing a mode button for switching a character type to be input;
providing a character table in which each of the plurality of characters assigned to said each of the plurality of operation buttons is defined in accordance with the character type; and
switching the character type corresponding to said each of the plurality of operation buttons by depressing the mode button.

15. The method according to claim 13, **characterized in that** the signal is directly transmitted via wireless communications.

16. The method according to claim 15, **characterized in that** the signal is directly transmitted via Bluetooth RF wireless communications.

17. The method according to claim 15, **characterized in that** the signal is directly transmitted via infrared wireless communications.

18. The method according to claim 13, **characterized in that** the number of depressions of said one of the plurality of operation buttons occurs within a preset time period.

19. A method of inputting a character from a character input apparatus to a main apparatus located at a remote location, **characterized by** comprising the steps of:
providing a plurality of operation buttons, to each of which a plurality of characters is assigned;
providing a transmission button;
selecting one of said plurality of characters assigned to one of the plurality of operation buttons in accordance with a number of depressions of said one of the plurality of operation buttons; and
directly transmitting to said main apparatus, upon depression of said transmission button, a signal corresponding to the selected one of said plurality of characters.

20. The method according to claim 19,
**characterized by** further comprising the steps of:
providing a mode button for switching a character type to be input;
providing a character table in which each of the plurality of characters assigned to said each of the plurality of operation buttons is defined in accordance with the character type; and
switching the character type corresponding to said each of the plurality of operation buttons by depressing the mode button.

21. The method according to claim 19,
**characterized in that** the main apparatus comprises a television system.

22. The method according to claim 19, **characterized in that** the main apparatus comprises at least one of a personal computer, a sound system, a DVD player, a VCR, and a personal digital assistant.

23. In a remote character input system for an electronic device, the system comprising a main apparatus and a character input apparatus for inputting a character from a remote location to the main apparatus, a method of inputting characters from the character input apparatus to the main apparatus, the method **characterized by** comprising the steps of:
providing a plurality of operation buttons; and
providing an operation signal transmission device which transmits to said main apparatus an operation signal corresponding to at least one of the plurality of operation buttons when the at least one of the plurality of operation buttons is depressed;
providing a display device for the main apparatus;
providing a character table for the main apparatus in which a plurality of characters assigned to the operation signal are defined;
providing an operation signal receiving device for the main apparatus for receiving the operation signal transmitted from the character input device; and
providing an input control device for the main apparatus which selects one of said plurality of characters assigned to the operation signal received by the operation signal receiving device in accordance with the number of times the operation signal is received, and causes the display device to display the selected one of said plurality of characters.

24. A method according to claim 23, **characterized by** further comprising the steps of:
providing a mode button for switching a character type to be input;
providing a mode signal transmission device for transmitting a mode signal corresponding to the mode button to the main apparatus when the mode button is depressed; and
providing a mode signal receiving device for said main apparatus for receiving the mode signal transmitted from the character input device;
wherein said character table defines the plurality of characters assigned to the operation signal in accordance with the character type; and
wherein said input control device switches the character type corresponding to the operation signal based on the character table, when the mode signal is received by the mode signal receiving device.
